# EUROPEAN PATENT SPECIFICATION

(11) **EP 2 602 191 B1**
(45) Date of publication and mention of the grant of the patent: **11.05.2016**
(21) Application number: 11192028.6
(22) Date of filing: 05.12.2011
(51) Int. Cl.: B64D 13/06

(54) **Motor driven cabin air compressor with variable diffuser**
Motorbetriebener Kabinenluftkompressor mit verstellbarem Diffusor
Compresseur motorisé d'air de cabine doté d'un diffuseur variable

(43) Date of publication of application: 12.06.2013
(73) Proprietor: Hamilton Sundstrand Corporation, Windsor Locks, CT 06096-1010 (US)
(72) Inventor: Beers, Craig M., Wethersfield, CT 06109 (US); McAuliffe, Christopher, Windsor, CT 06095 (US)
(74) Representative: Tomlinson, Kerry John

(56) References cited:
- EP-A1- 1 445 428
- EP-A1- 1 527 994
- EP-A2- 1 640 673
- EP-A2- 1 783 048
- WO-A1-99/41145
- WO-A1-2008/014912
- FR-A1- 2 609 686
- US-A- 5 442 905
- US-A- 5 709 103
- US-A1- 2007 113 579
- US-A1- 2009 326 737

## Description

### BACKGROUND OF THE INVENTION

The subject matter disclosed herein relates to a motor driven cabin air compressor with a variable diffuser.

Aircraft environmental control systems incorporate turbomachines, commonly referred to as air cycle machines (ACMs), to help facilitate cooling and dehumidifying air for supply to a cabin of an aircraft. Air cycle machines can include two or more wheels having at least one compressor and at least one turbine disposed axially along the same shaft. On aircraft powered by gas turbine engines, the air to be conditioned in the air cycle machine is generally either compressed air bled from one or more of the compressor stages of the gas turbine engine or air diverted from another location on the aircraft. With either system, the air is passed through the compressor(s) of the air cycle machine where it is further compressed and then passed through a heat exchanger to cool the compressed air sufficiently to condense moisture therefrom. The dehumidified air continues through the environmental control system back to the turbine(s) of the air cycle machine. In the turbine(s), the air is expanded to both extract energy from the compressed air so as to drive the shaft and the compressor(s) coupled thereto and cool the air for use in the cabin as conditioned cooling air.

To meet required specifications for providing fresh air and maintain pressurization to the cabin during flight, environmental control systems on larger aircraft employ two separate (dual) air conditioning packs. Unfortunately, operating dual air conditioning packs may not be necessary or efficient in some circumstances such as when the plane is on the tarmac. In this instance and others, operating only a single air conditioning pack could accomplish the conditioning of air for the cabin.

US 5442905 discloses the features of the pre-characterizing portion of claim 1.

### BRIEF DESCRIPTION OF THE INVENTION

The present invention provides an air cycle machine, comprising: a compressor section; a turbine section having an inlet nozzle with a variable size; a motor to drive the compressor; and a common rotating shaft on which the compressor section, the turbine section and the motor are mounted, the turbine section driving rotation of the shaft to provide additional drive power to the compressor section along with that of the motor, and characterized by the compressor section having a variable area diffuser, and wherein the turbine section comprises a shroud, a first cavity, a valve body, a second cavity, and a poppet;
wherein the poppet is slidably mounted on the shroud, is configured to seal the first cavity from the inlet nozzle and the second cavity, and may slidably extend into the nozzle to reduce the size of the inlet nozzle;
wherein the valve body is configured to be selectively controlled to allow for fluid communication between the first cavity and either an inlet of the inlet nozzle or an ambient air source external to the air cycle machine; and
wherein the second cavity is defined by the poppet and the shroud and is maintained at a pressure intermediate the pressure at the inlet and of the ambient air source.

The air cycle machine may be for use in a RAM engine in an aircraft and includes a compressor section having a variable area diffuser to compress RAM inlet air.

These and other advantages and features will become more apparent from the following description taken in conjunction with the drawings.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an air cycle machine for an environmental control system of an aircraft;
FIG. 2A is an enlarged view of a turbine inlet nozzle of the air cycle machine with a poppet member in a first position;
FIG. 2B is an enlarged view of the turbine inlet nozzle of the air cycle machine with the poppet member in a second position;
FIG. 3 is a partially broken view of a variable area diffuser in the direction of arrows 2-2 of FIG. 4;
FIG. 4 is an enlarged cross-sectional view of a variable area diffuser; and
FIG. 5 is a schematic illustration of the air cycle machine.

The detailed description explains embodiments of the invention, together with advantages and features, by way of example with reference to the drawings.

### DETAILED DESCRIPTION OF THE INVENTION

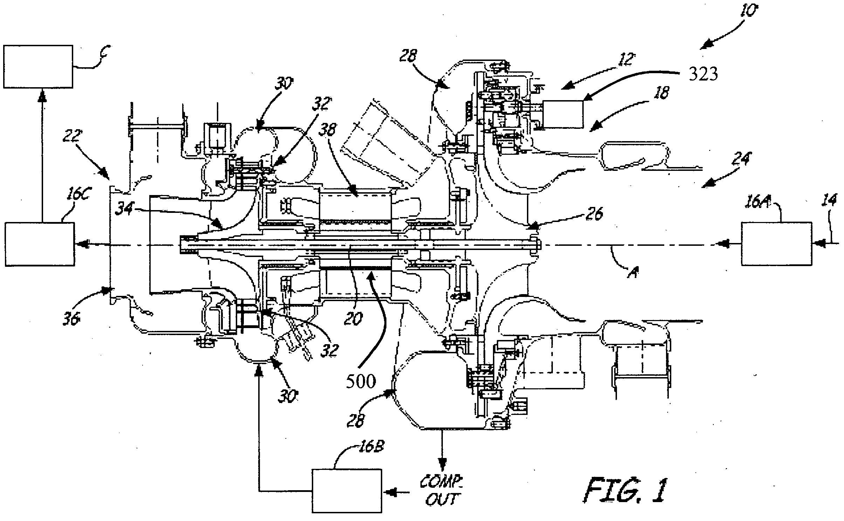

FIG. 1 shows a schematic view of an environmental control system (ECS) 10. The environmental control system 10 includes an air cycle machine 12 that receives air 14 that is conditioned by various devices symbolically indicated as 16A, 16B, and 16C to produce air flow at a desired temperature and pressure for aircraft cabin C. The air cycle machine 12 includes a compressor section 18, a shaft 20, and a turbine section 22. The compressor section 18 has a compressor inlet 24, a compressor wheel 26 and a compressor outlet 28. The turbine section 22 includes a turbine inlet 30, turbine inlet nozzle 32, turbine wheel 34 and turbine outlet 36.

System air 14 is bled from one or more of the compressor stages of the gas turbine engines of the aircraft or directed from an air source at another location on the aircraft. One or more devices 16A can condition (e.g., preheat, acoustically treat) the air 14 prior to its entry into the air cycle machine 12. The air 14 enters the air cycle machine 12 at the compressor section 18 through the compressor inlet 24. The air 14 is compressed to a higher pressure by the compressor wheel 26, which is mounted on the shaft 20 for rotation about axis A. The compressed air 14 is output to the remainder of the environmental control system 10 via the compressor outlet 28. Air 14 output from the compressor section 18 is conditioned by various devices 16B to change the characteristics of the air 14 that enters the turbine section 22 via the turbine inlet 30. These devices 16B can include heat exchangers, condensers, and/or water extractors/collectors that condition the air 14 to a desired pressure and temperature.

The turbine inlet nozzle 32 receives air 14 entering the air cycle machine 12 through the inlet 30 and is disposed adjacent the turbine wheel 34 to direct the flow of air 14 thereto. As will be discussed subsequently, the air cycle machine 12 is configured with a valve to vary the size of turbine inlet nozzle 32 as desired to better optimize the efficiency of the environmental control system 10. In particular, the selectively variable turbine inlet nozzle 32 disclosed herein allows the power consumption of the environmental control system 10 to be reduced, for example, by operating only a single air conditioning pack to condition the cabin rather than operating two air conditioning packs in some instances.

The turbine wheel 34 is mounted on the shaft 20 to drive rotation of the shaft 20 and compressor wheel 26 about axis A. After passing through the turbine inlet nozzle 32 the air 14 is expanded to both extract energy from the air 14 so as to drive the shaft 20 and the compressor wheel 26 (in combination with a motor 38 mounted along the shaft 20 in some embodiments) and to cool the air 14 to prepare it for the cabin. After expansion, the air 14 passes through the turbine outlet 36 out of the air cycle machine 12. The air 14 can pass through one or more devices 16C (e.g., heat exchangers, compact mixers, and/or acoustic treatment devices) before reaching the cabin C at the desired temperature and pressure.

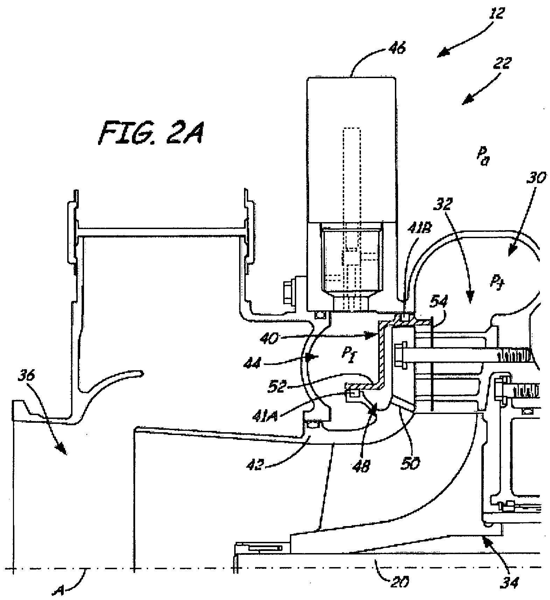

FIG. 2A is an enlarged view of the turbine section 22 with a poppet member 40 disposed in a first position extending into the turbine inlet nozzle 32. In addition to the turbine inlet 30, the turbine inlet nozzle 32, the turbine wheel 34, the turbine outlet 36, and the poppet member 40, the turbine section 22 includes a shroud 42, a first cavity 44, a valve body 46, and a second cavity 48. The shroud 42 has a passage 50. The poppet member 40 includes a main body 52 and seals 41A and 41B. An arcuate plate 54 is fixed within the turbine inlet nozzle 32.

As illustrated in FIG. 2A, the poppet member 40 is slidably mounted on the stator shroud 42 and is configured to seal the first cavity 44 from the turbine inlet nozzle 32. In particular, seals 41A and 41B are disposed between the poppet member 40 and the shroud 42 to allow for pressurization of the first cavity 44. The first cavity 44 serves as an annular plenum that is defined by portions of the shroud 42, the poppet member 40, the valve body 46, and other portions of the casing of the air cycle machine 12. The valve body 46 is mounted in fluid communication with the first cavity 44.

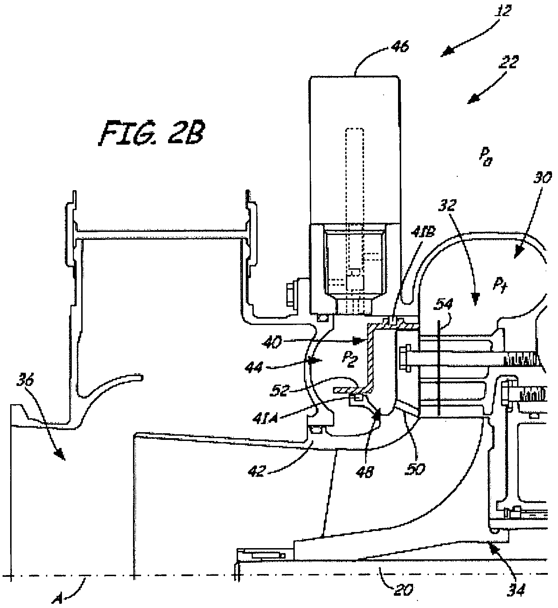

The valve body 46 can be any valve commonly known in the art for selectively communicating air from two ports (two pressure sources) to a third port. The valve body 46 can be controlled to move a member between a first position that blocks a first of the three ports and allows the second and third ports to be in fluid communication, and a second position that blocks the second port and allows the first and third ports to be in fluid communication. The valve body 46 is controlled to vary the pressure in the first cavity 44 between a first pressure Pₗ, equal to or about equal to the pressure Pₜ within the turbine inlet 30 (illustrated in FIG. 2A), and a second lower pressure P₂, equal to or about equal to an ambient pressure Pₐ external to the environmental control system 10 and air cycle machine 12 (illustrated in FIG. 2B). Thus, the valve body 46 is selectively controlled to allow for fluid communication between the first cavity 44 and either the turbine inlet 30 or the ambient air source external to the air cycle machine 12. In the first position shown in FIG. 2A, the first cavity 44 is in fluid communication with the turbine inlet 30. The higher first pressure Pₗ that results from this arrangement forces the poppet member 40 outward expanding the volume of the first cavity 44. Thus, in the first position, the poppet member 40 extends from the first cavity 44 into the turbine inlet nozzle 32 to reduce the size (volume and/or cross-sectional area) of the inlet turbine nozzle 32 that receives air 14 from the turbine inlet 30. In this position, the poppet member 40 restricts the flow of air 14 to the turbine wheel 34. The reduced air flow to the turbine wheel 34 maybe desirable in some instances, for example, if it is necessary to operate both air conditioning packs to maintain the cabin at a desired pressure and temperature.

The second cavity 48 is defined by the shroud 42 and the poppet member 40 and is positioned radially outward of the turbine wheel 34 with respect to axis A. The poppet member 40 separates the first cavity 44 from the second cavity 48. The passage 50 through shroud 42 allows the second cavity 48 to be in fluid communication with the turbine inlet nozzle 32 immediately adjacent to the turbine wheel 34. This arrangement allows the second cavity 48 to be maintained at or about the static pressure experienced within the turbine inlet nozzle 32 immediately adjacent to the turbine wheel 34. This static pressure is lower than the pressure at the turbine inlet 30 (and selectively the pressure of the first cavity 44) but greater than the ambient pressure external to the air cycle machine 12 (and selectively the pressure of the first cavity 44), which allows for actuation of the poppet valve 40.

The poppet valve 40 includes a main body 52 that is mounted on the shroud 42 and configured to seal and separate the first cavity 44 from the second cavity 48. The main body 52 is actuated as discussed to slide relative to shroud 42. In the first position shown in FIG. 2A, the main body 52 extends from the first cavity 44 and shroud 42 into the turbine inlet nozzle 32. The arcuate plate 54 is fixed to the turbine inlet nozzle 32 and divides the turbine inlet nozzle into two sections. The plate 54 is aligned within the turbine inlet nozzle 32 so as to minimally interfere with the direction of airflow toward the turbine wheel 34. In particular, the plate 54 is configured with a small cross-sectional area interfacing the airflow and has a larger surface that extends generally parallel to one of the walls of the turbine inlet nozzle 32. The plate 54 extends generally radially to immediately adjacent the turbine wheel 34, thereby, dividing the turbine inlet nozzle 32 into a primary section (through which air 14 flows when the poppet member 40 is in the first position illustrated in FIG. 2A) and a secondary section (through which air 14 generally does not pass when the poppet member 40 is in the first position).

FIG. 2B is an enlarged view of the turbine section 22 with the poppet member 40 disposed in a second position. In the second position, the first cavity 44 is in fluid communication with the ambient air source external to the air cycle machine 12. As a result of this arrangement, the pressure within the second cavity 48 (the static pressure) exceeds the second pressure P₂ within the first cavity 44 and the poppet member 40 moves decreasing the volume of the first cavity 44 and increasing the volume of the second cavity 48. The movement of the main body 52 of the poppet member 40 within the first cavity 44 retracts main body 52 from at least a portion of the turbine inlet nozzle 32, allowing airflow through the secondary section of the turbine inlet nozzle 32, thereby increasing the size (volume and/or cross sectional area) of the turbine inlet nozzle 32 through which air 14 flows to the turbine wheel 34. Thus, in the second position shown in FIG. 2B virtually the entire airflow passes through the turbine inlet nozzle 32 unrestricted by the poppet member 40 to the turbine wheel 34.

By varying the pressure of the first cavity 44 in the manner disclosed to selectively move the poppet member 40 within the turbine inlet nozzle 32, the efficiency of the environmental control system 10 can be improved. In particular, selectively moving the poppet member 40 to vary the size of the turbine inlet nozzle 32 when desired allows the power consumption of the environmental control system 10 to be reduced, for example, by operating only a single air conditioning pack to condition the cabin rather than operating both air conditioning packs.

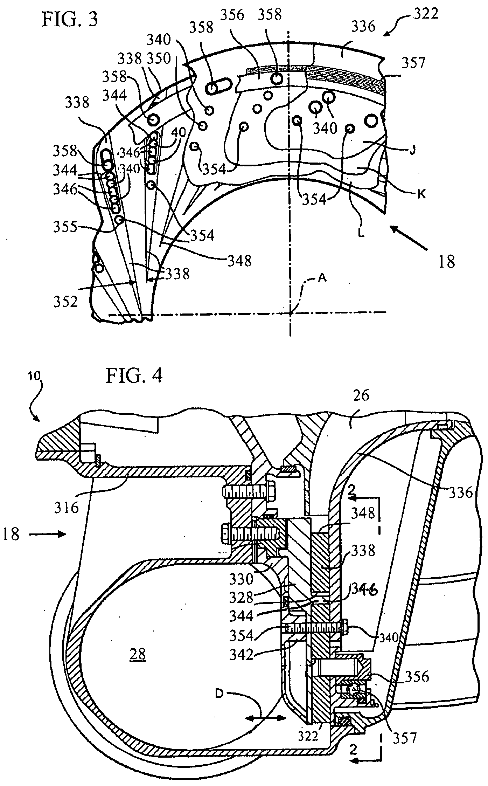

Referring to FIGS. 3 and 4, the compressor section 18 includes a variable area diffuser 322 with an actuator 323 (see FIG. 1) to vary the inlet throat 352 (see FIG. 3) to vary a flow rate through the ECS 10. The variable area diffuser 322 includes a backing plate 328 that is isolated from deflection, D. In conventional devices, the backing plate 328 would be secured directly to the housing 316 contributing to the diffuser vanes binding. Instead, the inventive diffuser 322 employs a mounting plate 330 that supports the backing plate 328. The inner and outer periphery of the backing plate 328 is supported by the mounting plate 330, but is also permitted to move axially independently of the mounting plate 330.

A shroud 336 is supported by the housing 316 and may deflect axially under load. Multiple vanes 338 are retained between the backing plate 328 and shroud 336 and, typically, a few thousandths of an inch of clearance is provided between the vane 338 and the backing plate 328 and shroud 336. In the example system shown, there are 323 vanes that are modulated between full open and 40% of full open.

The vanes 338 include an inlet end 348 and an outlet end 350. The inlet end 348 provides an adjustable throat 352, shown in FIG. 2, which is provided by pivoting the vanes 338. To provide improved containment, the present invention includes an aperture 344 arranged between the inlet and outlet ends 348 and 350. The aperture is elongated in the direction of the length of the vane 338. Protrusions 346 extend from the backing plate 328 through the aperture 344. In the example shown, the protrusions 346 are integral with the backing plate 328 and extend to engage the shroud 336. Bolts 340, shown in FIG. 3 and 4, extend through the aperture 344 to secure the vane 338 between the shroud 336 and backing plate 328. The additional bolts 340 and protrusions 346 of the present invention provide improved containment of the vanes 338 in the event of a failure.

The mounting plate 330 includes a boss 342 for each vane 338. Each vane 338 includes a hole 355 for receiving a pivot pin 354. The pivot pin 354 extends through an opening in the shroud to the mounting plate 330 to secure the vane 338 between the shroud 336 and backing plate 328. An end of the pivot pin 354 is secured into the boss 342. Openings in the backing plate 328, vane 338 and shroud 336 are in a slip fit relationship relative to the pivot pin 354 to permit the shroud 336 and backing plate 328 to deflect axially without binding the vane 338.

The shroud 336 is shown broken along planes J, K and L in FIG. 3 to better illustrate the interrelationship of diffuser components. The vanes 338 include a slot that receives a drive pin 358. The drive pins 358 are mounted on a drive ring 356 that is rotated by the actuator 323 to rotate the vanes 338 about the pivot pins 354. The drive ring 356 includes a bearing 357 supporting the drive ring 356 in the housing 316. The drive pin 358 is received in a slot in the shroud 336 that defines the positional limits of the vanes 338.

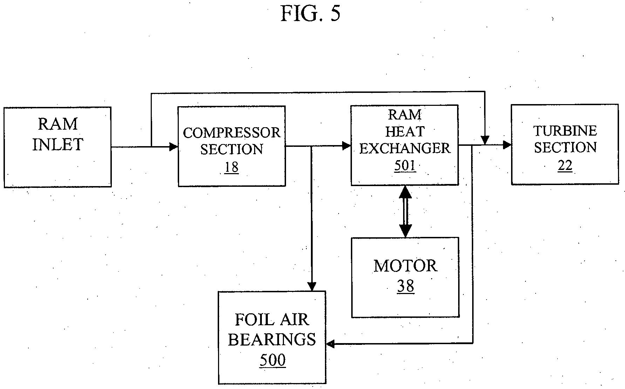

With reference to FIG. 5, the turbine section 22, the compressor section 18 and the motor 38 are each mounted on the shaft 20, which acts as a common rotating shaft, and each is supported on foil air bearings 500 (see FIG. 1). The compressor section 18 has a continuously variable area diffuser 322 used to provide compressed air utilized for aircraft cabin pressurization and the turbine section 22 includes a dual nozzle turbine, as described above, with control not limited to turbine pressure ratio in which the poppet member 40 actuates to control turbine nozzle area based upon whether 1 or 2 packs are in operation. Expansion through the turbine section 22 may be utilized for supply of cooling air to aircraft cabin C and to generate shaft power to assist the motor 38 in driving the compressor section 18.

As shown in FIG. 5, the motor 38 may include an integrally cooled motor that is disposed in communication with a RAM heat exchanger 501 whereby a pressure differential across the RAM heat exchanger 501 is used to generate cooling flow. A cooling flow may be tapped from the compressor inlet 24 upstream of the RAM heat exchanger 501 and exited to the RAM ducting downstream of the RAM heat exchanger 501. Also, bearing cooling supply air may be tapped from the compressor outlet 28 and/or after cooling through the RAM heat exchanger 501.

## Claims

1. An air cycle machine (12), comprising:
a compressor section (18);
a turbine section (22) having an inlet nozzle (32) with a variable size;
a motor (38) to drive the compressor (18); and
a common rotating shaft (20) on which the compressor section (18), the turbine section (22) and the motor (38) are mounted,
the turbine section (22) driving rotation of the shaft (20) to provide additional drive power to the compressor section (18) along with that of the motor (38),
and **characterized by** the compressor section having a variable area diffuser (322), and wherein the turbine section (22) comprises a shroud (42), a first cavity (44), a valve body (46), a second cavity (48), and a poppet (40);
wherein the poppet (40) is slidably mounted on the shroud (42), is configured to seal the first cavity from the inlet nozzle and the second cavity, and may slidably extend into the nozzle (32) to reduce the size of the inlet nozzle;
wherein the valve body (46) is configured to be selectively controlled to allow for fluid communication between the first cavity (44) and either an inlet (30) of the inlet nozzle (32) or an ambient air source external to the air cycle machine; and
wherein the second cavity (48) is defined by the poppet (40) and the shroud (42) and is maintained at a pressure intermediate the pressure at the inlet (30) and of the ambient air source.

2. The air cycle machine (12) according to claim 1, wherein the compressor section (18), the turbine section (22) and the motor (38) are each supported on air bearings (500).

3. The air cycle machine (12) according to claim 1 or 2, wherein the variable size of the inlet nozzle (32) is set according to operation of a predefined number of air-conditioning packs.

4. The air cycle machine (12) according to claim 1, 2 or 3, wherein the motor (38) comprises an integrally cooled motor.

5. The air cycle machine (12) according to any preceding claim, further comprising a heat exchanger (501) coupled to the motor (38).

6. The air cycle machine (12) according to claim 5, wherein a first cooling flow is tapped from an inlet (24) of the compressor section (18) and exited downstream form the heat exchanger (501).

7. The air cycle machine (12) according to claim 6, wherein a second cooling flow is tapped from an outlet (28) of the compressor section (18) for air bearing (501) cooling.

8. The air cycle machine (12) according to any preceding claim, wherein the variable area diffuser (322) is configured in use to compress inlet air; and wherein the inlet nozzle (32) with a variable size is configured to use to receive the compressed air from the compressor section (18) and to expand the air for use in an aircraft cabin (C).

9. The air cycle machine (12) according to any preceding claim, for use in a RAM engine in an aircraft, wherein the variable area diffuser (322) is configured in use to compress RAM inlet air.

## Patentansprüche

1. Luftzirkulationsmaschine (12), umfassend:
einen Verdichterabschnitt (18);
einen Turbinenabschnitt (22) mit einer Einlassdüse (32) mit einer variablen Größe;
einen Motor (38) zum Antreiben des Verdichters (18); und
eine gemeinsame Drehwelle (20), an der der Verdichterabschnitt (18), der Turbinenabschnitt (22) und der Motor (38) angebracht sind,
wobei der Turbinenabschntitt (22) die Drehung der Welle (20) antreibt, um zusätzliche Antriebsleistung für den Verdichterabschnitt (18) zusammen mit derjenigen des Motors (38) bereitzustellen,
und **dadurch gekennzeichnet, dass** der Verdichterabschnitt einen Diffusor mit variablem Querschnitt (322) aufweist, und wobei der Turbinenabschnitt (22) einen Mantel (42), einen ersten Hohlraum (44), einen Ventilkörper (46), einen zweiten Hohlraum (48) und einen Kegel (40) umfasst;
wobei der Kegel (40) verschiebbar an dem Mantel (42) angebracht ist, dazu konfiguriert ist, den ersten Hohlraum zu der Einlassdüse und dem zweiten Hohlraum abzudichten, und sich verschiebbar in die Düse (32) erstrecken kann, um die Größe der Einlassdüse zu reduzieren;
wobei der Ventilkörper (46) dazu konfiguriert ist, selektiv gesteuert zu werden, um eine Fluidverbindung zwischen dem ersten Hohlraum (44) und entweder einem Einlass (30) der Einlassdüse (32) oder einer Umgebungsluftquelle außerhalb der Luftzirkulationsmaschine zuzulassen; und
wobei der zweite Hohlraum (48) durch den Kegel (40) und den Mantel (42) definiert wird und auf einem Druck zwischen dem Druck am Einlass (30) und der Umgebungsluftquelle gehalten wird.

2. Luftzirkulationsmaschine (12) nach Anspruch 1, wobei der Verdichterabschnitt (18), der Turbinenabschnitt (22) und der Motor (38) von Luftlagern (500) gelagert werden.

3. Luftzirkulationsmaschine (12) nach Anspruch 1 oder 2, wobei die variable Größe der Einlassdüse (32) gemäß dem Betrieb einer vorgegebenen Anzahl von Luftaufbereitungsanlagen eingestellt wird.

4. Luftzirkulationsmaschine (12) nach Anspruch 1, 2 oder 3, wobei der Motor (38) einen einteilig gekühlten Motor umfasst.

5. Luftzirkulationsmaschine (12) nach einem der vorangehenden Ansprüche, ferner umfassend einen Wärmetauscher (501), der an den Motor (38) gekoppelt ist.

6. Luftzirkulationsmaschine (12) nach Anspruch 5, wobei ein erster Kühlungsstrom von einem Einlass (24) des Verdichterabschnitts (18) abgezapft wird und stromabwärts des Wärmetauschers (501) austritt.

7. Luftzirkulationsmaschine (12) nach Anspruch 6, wobei ein zweiter Kühlungsstrom von einem Auslass (28) des Verdichterabschnitts (18) zur Kühlung des Luftlagers (501) abgezapft wird.

8. Luftzirkulationsmaschine (12) nach einem der vorangehenden Ansprüche, wobei der Diffusor mit variablem Querschnitt (322) dazu konfiguriert ist, im Gebrauch Einlassluft zu verdichten; und wobei die Einlassdüse (32) mit einer variablen Größe dazu konfiguriert ist, die verdichtete Luft von dem Verdichterabschnitt (18) aufzunehmen und die Luft zur Verwendung einer Flugzeugkabine (C) auszudehnen.

9. Luftzirkulationsmaschine (12) nach einem der vorangehenden Ansprüche zur Verwendung in einem RAM-Motor in einem Flugzeug, wobei der Diffusor mit variablem Querschnitt (322) dazu konfiguriert ist, im Gebrauch RAM-Einlassluft zu verdichten.

## Revendications

1. Groupe turbo-refroidisseur (12), comprenant :
une section compresseur (18) ;
une section turbine (22) ayant une buse d'entrée (32) de taille variable ;
un moteur (38) pour entraîner le compresseur (18) ; et
un arbre rotatif commun (20) sur lequel la section compresseur (18), la section turbine (22) et le moteur (38) sont montés,
la section turbine (22) entraînant la rotation de l'arbre (20) pour fournir une puissance d'entraînement supplémentaire à la section compresseur (18) en plus de celle du moteur (38),
et **caractérisé par** la section compresseur ayant un diffuseur de surface variable (322) et dans lequel la section turbine (22) comprend une coiffe (42), une première cavité (44), un corps de soupape (46), une deuxième cavité (48) et un champignon (40) ;
dans lequel le champignon (40) est monté de manière coulissante sur la coiffe (42), est configuré pour fermer hermétiquement la première cavité de la buse d'entrée et la deuxième cavité et peut s'étendre de manière coulissante dans la buse (32) pour réduire la taille de la buse d'entrée ;
dans lequel le corps de soupape (46) est configuré pour être sélectivement commandé pour permettre une communication fluidique entre la première cavité (44) et soit une entrée (30) de la buse d'entrée (32) soit une source d'air ambiant externe au groupe turbo-refroidisseur ; et
dans lequel la deuxième cavité (48) est définie par le champignon (40) et la coiffe (42) et est maintenue à une pression intermédiaire de la pression à l'entrée (30) et de la source d'air ambiant.

2. Groupe turbo-refroidisseur (12) selon la revendication 1, dans lequel la section compresseur (18), la section turbine (22) et le moteur (38) sont chacun supportés sur des paliers à air (500).

3. Groupe turbo-refroidisseur (12) selon la revendication 1 ou 2, dans lequel la taille variable de la buse d'entrée (32) est réglée en fonction du fonctionnement d'un nombre prédéfini de groupes de conditionnement d'air.

4. Groupe turbo-refroidisseur (12) selon la revendication 1, 2 ou 3, dans lequel le moteur (38) comprend un moteur intégralement refroidi.

5. Groupe turbo-refroidisseur (12) selon une quelconque revendication précédente, comprenant en outre un échangeur de chaleur (501) couplé au moteur (38).

6. Groupe turbo-refroidisseur (12) selon la revendication 5, dans lequel un premier flux de refroidissement est puisé d'une entrée (24) de la section compresseur (18) et sorti en aval de l'échangeur de chaleur (501).

7. Groupe turbo-refroidisseur (12) selon la revendication 6, dans lequel un deuxième flux de refroidissement est puisé d'une sortie (28) de la section compresseur (18) pour le refroidissement du palier à air (501).

8. Groupe turbo-refroidisseur (12) selon une quelconque revendication précédente, dans lequel le diffuseur de surface variable (322) est configuré en utilisation pour comprimer l'air d'entrée ; et dans lequel la buse d'entrée (32) de taille variable est configurée en utilisation pour recevoir l'air comprimé de la section compresseur (18) et pour dilater l'air destiné à être utilisé dans une cabine d'aéronef (C).

9. Groupe turbo-refroidisseur (12) selon une quelconque revendication précédente, destiné à être utilisé dans un moteur RAM dans un aéronef, dans lequel le diffuseur de surface variable (322) est configuré en utilisation pour comprimer l'air d'entrée RAM.
